# EUROPEAN PATENT APPLICATION

(11) **EP 1 634 667 A1**
(43) Date of publication of application: **15.03.2006**
(21) Application number: 05019482.8
(22) Date of filing: 07.09.2005
(51) Int. Cl.: B23D 27/04, B23D 29/00, B26B 15/00

(54) **Electric clipper**

(30) Priority: 09.09.2004 CN 200420093224
(71) Applicant: Tu, Shu-Woan, Rosemead CA 91770 (US)
(72) Inventor: Tu, Shu-Woan, Rosemead CA 91770 (US)
(74) Representative: Viering, Jentschura & Partner

(57) **Abstract**

An electric clipper is driven by a motor (5) whose power is supplied from a dry battery unit, or a rechargeable battery unit accommodated in the housing (1) of the clipper. Revolution speed of the motor (5) is reduced by a speed reduction gear unit (6) so as to amplify the output torque for operating a cutter (8). The cutting motion of the two blades (81,82) of the cutter is performed by collaborated action of an eccentric shaft pin (71) on a rotating disc (7) and a movable arm (812) provided for one of the two cutter blades (81,82). With this structure the cutter (8) can be used for cutting the hard metallic wires easily and securely without the fear of hurting the user's hand.

## Description

### BACKGROUND OF THE INVENTION

### 1. Field of the invention

The present invention relates to an electric clipper and more particularly, to a clipper which can cut hard materials like steel wires by powerful electrical force.

### 2. Description of the prior art

For interest to the hobbyist in homecrafts, various comprehensive tools are necessary. To meet the requirement for automation in every respect, parts of hand tools have become electrical motor operated instead of the manual type in the past. The electric drill is one of the most popular motor driven tools. However, there are still a lot of manual tools waiting to be converted into motor operation, the clipper which is used for cutting hard metallic wires in home workshop as well as for industrial application, has not yet been electrified up to now. Even how it will be convenient to have a pair of motor operated sharp scissors for flower arrangement to perform the work clean and neat, not to say how important to have a motor operated clipper for cutting hard metallic wires efficiently and securely in the industrial application.

Aiming at the above depicted defects, the present invention is to provide an ingeniously constructed electric clipper capable of operating conveniently and efficiently so as to rectify the disadvantages inherent to the convention al manually operated clipper.

### SUMMARY OF THE INVENTION

The main object of the present invention is to provide an electric clipper which can be used to easily cut the hard metallic wires.

The another object of the present invention is to provide an electric clipper which is simply constructed yet easy to handle and fabricate.

To achieve the above objects, the electric clipper is composed of a housing a motor, a speed reduction gear unit, a rotating disc, and a cutter. The housing is provided with a power supply unit at its rear end with a snap switch equipped on top of it. The snap switch is emerged out of the housing and is electrically connected to the power supply. The motor is installed in the housing and is electrically connected to the snap switch which controls the ON/OFF of the motor. The speed reduction gear unit is installed in the housing and is jointed to the output shaft of the motor so as to reduce the rotational speed of the motor thereby enlarging the output torque. The rotating disc is provided with an eccentric shaft pin. The rotating disc is also accommodated in the housing and jointed to the output shaft of the speed reduction gear unit 3with its center portion so as to rotate together and drive the eccentric shaft pin simultaneously. The cutter whose two blades are hinged crosswise like a pair of scissors and their terminals are emerged out of the housing. The terminal of one of the two blades is fixed, whereas the other one's terminal has an extended movable arm whose end is provided with a vertically protruded stop hook mating the eccentric shaft pin of the rotating disc. A compressed spring is equipped straddling between he end portions of two blades. With a structure constructed as such, when the rotating disc rotates, its eccentric shaft pin also rotates and reciprocates up and down with respect to the stop hook which in turn causes the eccentric shaft pin to actuate the movable arm of the cutter to make up and down cutting motion. The power supply to this electric clipper is either a dry battery unit or a rechargeable battery unit.

For fuller understanding of the nature and objects of the invention, reference should be made to the following detailed description taken in conjunction with the accompanying drawings.

These features and advantages of the present invention will be fully understood and appreciated from the following detailed description of the accompanying Drawings.

### BRIEF DESCRIPTION OF THE DRAWINGS

Fig. 1 is a schematic view of the electric clipper of the present invention;
Fig. 2 is a plane perspective view illustrating the operation of the electric clipper of the present invention;
Figs. 3A and 3B are three dimensional perspective views illustrating the operation of the electric clipper of the present invention; and
Figs 4A, 4B and 4C are downward views illustrating the operation of the electric clipper of the present invention.

### DETAILED DESCRIPTION OF THE PREFERRED EMBODIMENT

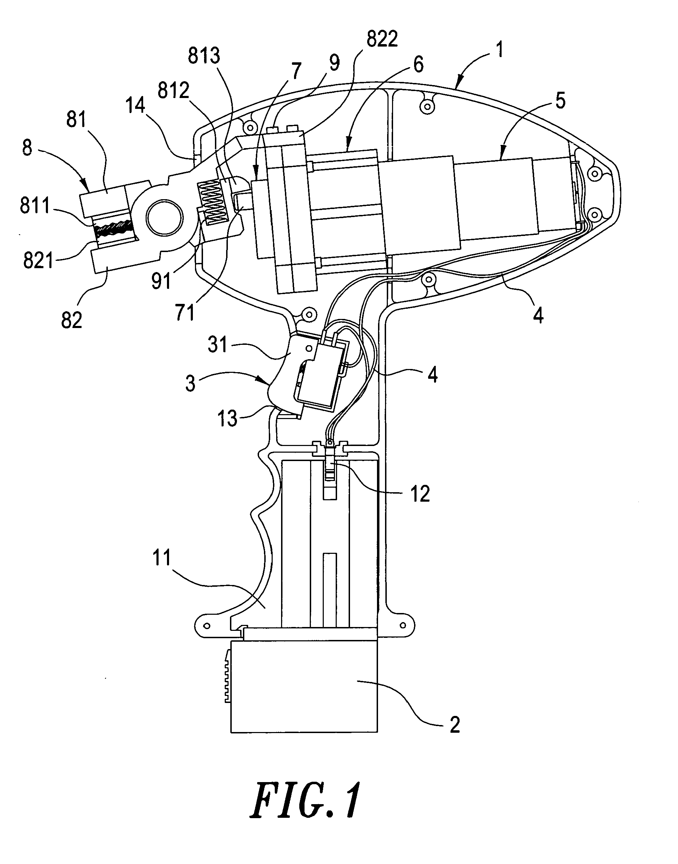

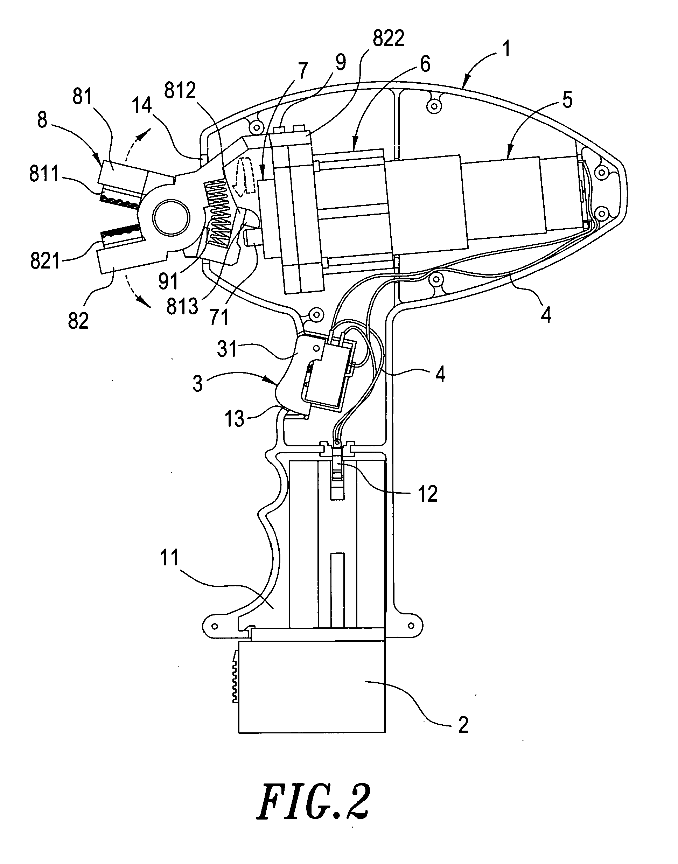

Referring to Figs. 1 and 2, the electric clipper of the present invention comprises a housing 1, a power supply unit 2, a snap switch 3, a motor 5, a speed reduction gear unit 6, a rotating disc 7, and a cutter8.

The housing 1 ahs an accommodation space 11 at its rear end, and a conductor blade 12 is provided on top of the accommodation space 11. An aperture 13 is provided at the middle section of the housing 1 and a port is opened at its front end.

The power supply unit 2 which may be a dry battery unit or a rechargeable battery unit, is accommodated in the accommodation space 11 to durably supply sufficient power to the electric clipper by contacting the terminal of the power supply unit 2 with the conductor blade 12. The power supply unit 2 is hooked tightly onto the housing 1 so that it is securely settled in the accommodation space 11.

The snap switch 3 is attached to the inner wall of the housing 1 with its snap button 31 emerged out of the aperture 13 formed on the middle section of the housing 1. the snap switch 3 is connected to the conductor blade 12 with conductors 4 so as to get power supply.

The motor 5 is installed in the housing 1 and electrically connected to the snap switch 3 with the conductors 4 so that ON/OFF of the motor 5 can be controlled by operating the snap button 31 of the snap switch 3.

The speed reduction gear unit 6 is also installed in the housing 1 with its input terminal jointed to the output shaft of the motor 5 so as to be driven by the motor 5 and reduce its rotational speed, and as a reward, obtain a larger torque.

The rotating disc 7 with an eccentric shaft pin 71 is accommodated in the housing 1. the center portion of the rotating disc 7 is jointed to the output shaft of the speed reduction gear unit 6 so that the rotating disc 7 is able to revolve along with the output terminal of the speed reduction gear unit 6.

The cutter 8 is formed of a first and a second blades 81 and 82 hinged crosswise like a pair of scissors. Both blade faces 811 and 821 are emerged out of the housing 1 through the port 14, and a locked arm 822 attached to the rear end of the second blade 82 is fastened to the speed reduction gear unit 6 with a locking device 9, whereas a movable arm 812 is vertically extended from the rear end of the first blade 81. The movable arm 812 has a stop hook 813 vertically protruded from its end to mate the eccentric shaft pin 71 of the rotating disc 7. A compressed spring 91 is equipped in the manner straddling between the locked arm 822 and the movable arm 812 so as to keep the two blades 81, 82 in opened state by the tensile force of the spring 91.

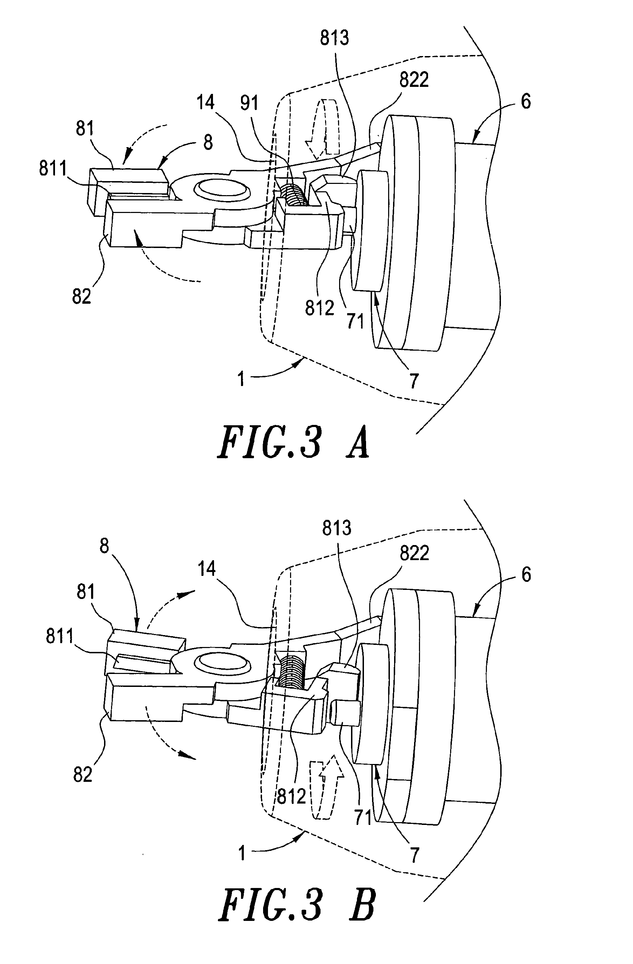

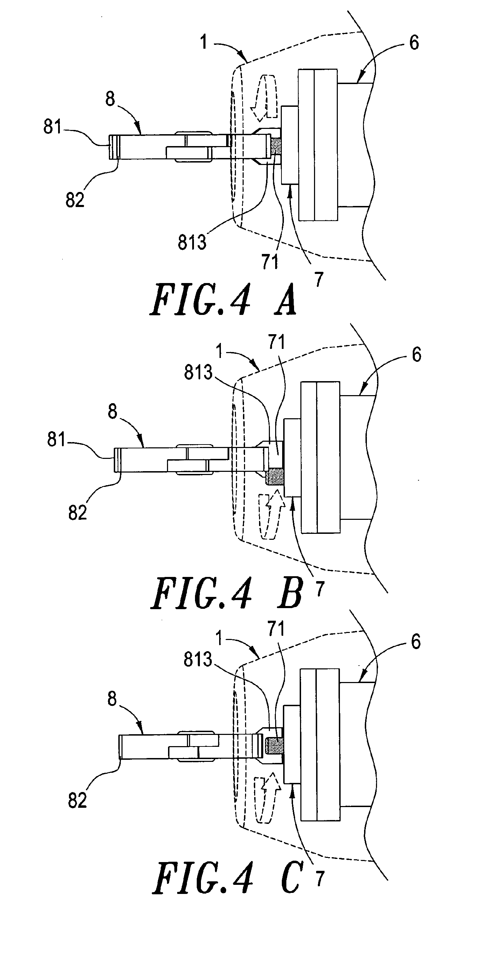

To understand the operational principle of the electric clipper of the present invention, please refer to Figs. 3A, 3B, 4A, 4B and 4C. For using the electric clipper, press the snap button 31 of the snap switch 3 to On so as to input the power from the power supply unit 2 to the motor 5, the rotational speed of the motor 5 is reduced by the speed reduction gear unit 6 to drive the rotating disc 7 with reduced rpm but amplified torque. At this instant the eccentric shaft pin 71 of the rotating disc 7 revolves simultaneously so as to forcibly mates the stop hook 813 protruded from the end of the movable arm 812 that causes the blades 81, 82 of the cutter 8 and the compressed spring 912 to keep in closed and compressed states. When the eccentric shaft pin 71 gradually revolves downwards, the stop hook 813 also moves downwards by the resilient force of the spring 91 and finally mates forcibly with the eccentric shaft pin 71. When the eccentric shaft pin 71 gradually revolves upwards, the stop hook 813 also moves upwards to compress the spring 91. In the is manner, the stop hook 813 always keeps mating with the eccentric shaft pin 71 when the latter revolves up and down without separation thereby driving the movable arm 812 of the first blade 81 to reciprocate up and down to perform cutting operation.

In all the electric clipper of the present invention has the following advantages compared with the conventional manually operated ones, namely:
1.The ingeniously designed mutual movement of the eccentric shaft pin and stop hook makes the clipper to work reliably and securely.
2.Addition of the speed reduction gear unit contributes to increasing the cutting torque.

Many changes and modifications in the above described embodiment of the invention can, of course, be carried out without departing from the scope thereof. Accordingly, to promote the progress in science and the useful arts, the invention is disclosed and is intended to be limited only by the scope of the appended claims.

## Claims

1. The electric clipper comprising:
a housing 1 provided with a power supply unit 2 at its rear portion with a snap switch 3 equipped on its top surface, wherein said snap switch 3 is emerged out of said housing 1 and is electrically connected to said power supply unit 2;
a motor 5 installed in said housing 1 being electrically connected to said snap switch 3, wherein said snap switch 3 is for controlling ON/OFF of said motor 5;
a speed reduction gear unit 6 installed in said housing 1 being jointed to the output shaft of said motor 5 thereby amplifying the output torque;
a rotating disc 7 accommodated in said housing 1 and having an eccentric shaft pin 71, wherein its center portion is jointed to the output shaft of said speed reduction gear unit so as to rotate together and drive said eccentric shaft pin simultaneously; and
a cutter 8 having two blades 81,82 hinged crosswise like a pair of scissors, wherein their terminals are merged out of said housing 1, the terminal of one of the two blades 82 is fixed, whereas the other one's terminal has an extended movable arm 812 whose end is provided with a vertically produced stop hook 813 mating said eccentric shaft pin 71 of said rotating disc 7, and a compressed spring 912 is equipped straddling between the end portion s of said two blades 81,82;
with such structure, when said rotating disc 7 rotates, said eccentric shaft pin 71 also revolves and reciprocates up and down with respect to said stop hook 813 which in turn causes said eccentric shaft pin 71 to actuate said movable
arm 812 of said cutter 8 to make up and down cutting motion.

2. The electric clipper of claim 1, wherein said power supply unit 2 is a dry battery unit.

3. The electric clipper of claim 1, wherein said power supply unit is a rechargeable battery unit.

4. The electric clipper of claim 1, wherein said power supply unit 2, said snap switch 3, and said motor 5 are electrically connected with conductors.

5. The electric clipper of claim 1, wherein an accommodation space 11 is formed at the rear portion of said housing 1 to accommodate said power supply unit 2, said accommodation space 11 has a conductor blade provided on its top surface to conduct the electricity by contacting the output terminal of said power supply unit.

6. The electric clipper of claim 1, wherein a terminal of one of said two blades 82 is jointed with said speed reduction gear unit 6.
